# EUROPEAN PATENT SPECIFICATION

(11) **EP 2 298 640 B1**
(45) Date of publication and mention of the grant of the patent: **23.05.2012**
(21) Application number: 10164448.2
(22) Date of filing: 31.05.2010
(51) Int. Cl.: B63H 5/16

(54) **Ducted pre-swirl stator assembly**
Kanal-Vorwirbelstatorgruppe
Ensemble de stator à contre-rotation à conduit

(30) Priority: 17.09.2009 KR 20090087978
(43) Date of publication of application: 23.03.2011
(73) Proprietor: Daewoo Shipbuilding&Marine Engineering Co., Ltd., Seoul-city (KR)
(72) Inventor: Jang, Young Hun, Seoul-city (KR); Jun, Dong Su, Gyeongsangnam-do (KR); Kim, Yong Soo, Gyeongsangnam-do (KR); Choi, Young Bok, Gyeonggi-do (KR)
(74) Representative: Prüfer & Partner GbR European Patent Attorneys

(56) References cited:
- EP-A1- 0 470 339
- JP-A- 57 158 191
- JP-A- 2008 239 060
- JP-U- 58 139 395
- US-A1- 2009 084 301

## Description

### BACKGROUND OF THE INVENTION

### 1. Field of the Invention

The present invention relates generally to ducted pre-swirl stator assemblies and, more particularly, to a ducted pre-swirl stator assembly in which a pre-swirl stator and a duct are arranged such that optimal coupling therebetween can be realized, thus enhancing the propulsion performances of a screw of a ship.

### 2. Description of the Related Art

Generally, a pre-swirl stator is provided on the stern boss of a ship ahead of a screw. The pre-swirl stator has a plurality of blades which are provided around the stern boss and extend predetermined lengths in radial directions. The pre-swirl stator varies an inflow angle at which fluid ahead of the screw flows towards the screw, thus enhancing the propulsion efficiency of the screw. In other words, the pre-swirl stator is a device for recovering energy loss with respect to the rotational direction. Document JP 58 139 395 U constitutes the closest prior art, and discloses the preamble of claim 1.

However, the conventional pre-swirl stator may induce damage to the blades attributable to cavitations or damage to the screw due to tip vortex cavitations which are generated on the outer ends of the blades. Furthermore, an increase in counter current on the screw due to the pre-swirl stator reduces the speed at which the screw rotates. Thus, in consideration of these problems, the screw must be redesigned. Therefore, there are many limitations in applying the pre-swirl stator to existing ships.

Meanwhile, a cylindrical duct which is coupled to the outer ends of the blades of the pre-swirl stator is provided around the pre-swirl stator. The duct functions to accelerate fluid ahead of the screw when suction force is generated by the operation of the screw, thus generating additional thrust in the duct itself in the direction in which the ship is advanced. As such, the duct accelerates and rectifies the flow of fluid ahead of the screw, thus enhancing the propulsion performances of the screw, and reducing propeller-induced hull-pressure fluctuations. However, in the case where the cylindrical duct is large in size, there is the probability of the problem of structural damage, and it is very difficult to ensure structural stability.

In conventional techniques, various structures which are a combination of the pre-swirl stator and the duct were proposed. However, a technique which can realize optimal coupling between the pre-swirl stator and the duct and thus maximize the propulsion efficiency and ensure the structural stability of the duct has not been developed.

### SUMMARY OF THE INVENTION

Accordingly, the present invention has been made keeping in mind the above problems occurring in the prior art, and an object of the present invention is to provide a ducted pre-swirl stator assembly in which a pre-swirl stator which varies an inflow angle of fluid into the screw to enhance the propulsion performances and a duct which accelerates and rectifies the flow of fluid drawn into the screw to further enhance the propulsion performance are configured and arranged such that the optimal coupling therebetween is realized, thus maximizing the propulsion performance of the screw.

Another object of the present invention is to provide a ducted pre-swirl stator assembly which realizes the optimal arrangement between the pre-swirl stator and the duct, thus reducing damage attributable to cavitations generated in the screw, minimizing vibrations of the ship generated by cavitations, and reliably ensuring the structural strength with which the duct is supported on the hull of the ship.

In order to accomplish the above object, the present invention provides a ducted pre-swirl stator assembly, including: a pre-swirl stator provided on a stern boss of a hull, the pre-swirl stator having at least one blade extending in a radial direction based on a center axis of a screw; a cylindrical duct coupled to an outer end of the blade of the pre-swirl stator; and a support fastening the duct to the hull. A center axis of the duct is eccentric upwards and to the right from the center axis of the screw with respect to a direction indicated from a stern side to a bow side.

Preferably, an eccentricity of the center axis of the duct from the center axis of the screw may be set with respect to a diameter Dp of the screw such that an upward eccentricity (Hc) satisfies 0 < Hc < 0.3Dp and a rightward eccentricity (Bc) satisfies 0 < Bc < 0.2Dp. Furthermore, an inner diameter (Dd) of the duct may satisfy 0.5Dp ≤ Dd ≤ 1.0Dp with respect to the diameter (Dp) of the screw.

The duct may have: an inclined curved portion on an inner surface of a leading edge of the duct, the inclined curved portion being inclined at an inclined angle ranging from 20° to 30° ; an inclined linear portion on an inner surface of a tailing edge of the duct, the inclined linear portion being inclined at an inclined angle ranging from 2 ° to 6 ° ; and a horizontal linear portion formed between the inclined curved portion and the inclined linear portion, the horizontal linear portion being connected to the outer end of the blade of the pre-swirl stator. The inclined angle of each of the inclined curved portion and the inclined linear portion may be set with respect to a line extending from the horizontal linear portion in a direction parallel to the horizontal linear portion.

In addition, lengths of the inclined curved portion, the horizontal linear portion and the inclined linear portion may respectively be 0.4 times, 0.2 times and 0.4 times a chord length of the duct. A distance between an end of a tailing edge of the duct and a center line of blades of the screw in a longitudinal direction of the hull may be set with respect to the diameter Dp of the screw such that 0.1Dp < H < 0.3Dp is satisfied.

The support may include: an upper support member connecting an outer surface of the duct to a lower portion of the hull ; and an upper support member connecting an inner surface of the duct to a lower portion of the stern boss.

The blade of the pre-swirl stator may comprise a plurality of blades arranged such that based on the center axis of the screw, two blades are disposed on a port side and one blade is disposed on a starboard side, or two blades are disposed on the port side and two blades are disposed on the starboard side. At least one pair of blades of the port/starboard side blades of the pre-swirl stator may be level with the center axis of the screw, and a remaining blade or remaining blades of the pre-swirl stator may be inclined upwards with respect to the center axis of the screw.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view illustrating the installation of a ducted pre-swirl stator assembly, according to an embodiment of the present invention;
FIGS. 2A and 2B respectively are a side view showing the installation of the ducted pre-swirl stator assembly and a partially broken view of a duct to show the coupling among a pre-swirl stator, a duct and a hull according to the present invention;
FIGS. 3 and 4 are front views illustrating the arrangement between the pre-swirl stator and the duct of FIGS. 1 and 2 in the direction from the stern side towards the bow side;
FIG. 5 is a view showing an eccentric ratio of the center axis of the duct to the center axis of a screw ;
FIG. 6 is a view showing the lengths of blades of the pre-swirl stator corresponding to the disposition of the duct which is eccentric from the center axis of the screw ;
FIG. 7 is a view showing the cross-section of the duct according to the present invention ;
FIG. 8 is a graph comparing distributions of counter currents for the case where only the pre-swirl stator is installed and the case where both the pre-swirl stator and the duct are installed;
FIG. 9 is of graphs comparatively showing the volumes of cavitations formed in the case where only the pre-swirl stator is installed and in the case where both the pre-swirl stator and the duct are installed;
FIG. 10 is a graph comparatively showing increments of thrust and fluctuating pressures of the case where neither the pre-swirl stator nor the duct are installed, the case where only the pre-swirl stator is installed and the case where both the pre-swirl stator and the duct are installed;
FIG. 11 is a graph comparing the distribution of counter current when the center axis of the duct is eccentrically displaced upwards from the center axis of the screw to that of the case where the center axis of the duct is aligned with the center axis of the screw ;
FIG. 12 is a graph comparing distribution of counter current of the case where the center axis of the duct is eccentrically displaced rightwards and upwards from the center axis of the screw to that of the case where the center axis of the duct is eccentrically displaced only upwards from the center axis of the screw ;
FIG. 13 is of views comparatively showing distributions of variation in current speed depending on the profiles of the cross-sections of the ducts of the conventional technique and the present invention; and
FIG. 14 is a graph comparatively showing fluid flow rectifying effects depending on the distance between the tailing edge of the duct and the axis of the screw.

### DESCRIPTION OF THE PREFERRED EMBODIMENTS

Hereinafter, a ducted pre-swirl stator assembly according to a preferred embodiment of the present invention will be described in detail with reference to the attached drawings.

As shown in the drawings, a stern boss 10 is disposed in the stern of a hull. A screw 12 is rotatably provided on the stern boss 10 such that the screw 12 can be rotated by drive force supplied from an engine. A pre-swirl stator 14 is provided on the stern boss 10 ahead of the screw 12 and radially extends based on a center axis X of the screw 12. A cylindrical duct 16 which is coupled to the outer end of the pre-swirl stator 14 is provided around the pre-swirl stator 14.

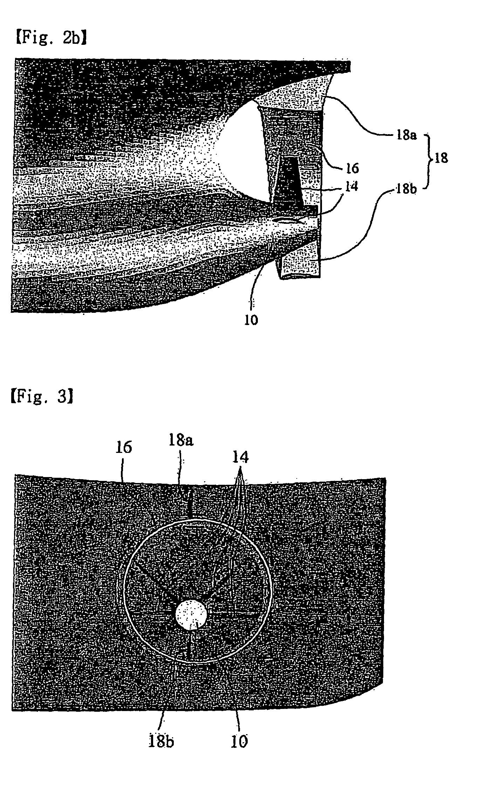

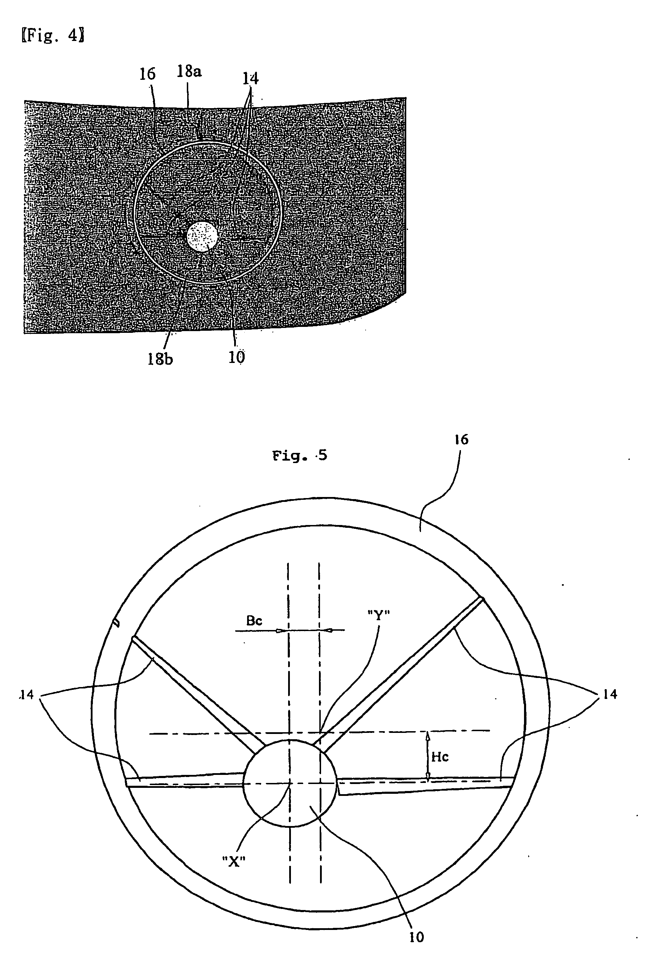

Preferably, the pre-swirl stator 14 comprises at least one or more blades which radially extend with respect to the center axis X of the screw 12. The blades of the pre-swirl stator 14 can be arranged in a variety of different manners. For example, based on the center axis X of the screw 12, the blades may be arranged such that two blades are disposed on the port side and one blade is disposed on the starboard side, or two blades are disposed on the port side and two blades are disposed on the starboard side. As shown in FIGS. 3 and 4, in the embodiment, of the port/starboard side blades of the pre-swirl stator 14, at least one pair of blades is level with the center axis X of the screw 12, and the remaining blades of the pre-swirl stator 14 are inclined upwards at an angle of about 45 ° with respect to the horizontal plane including the center axis X of the screw 12.

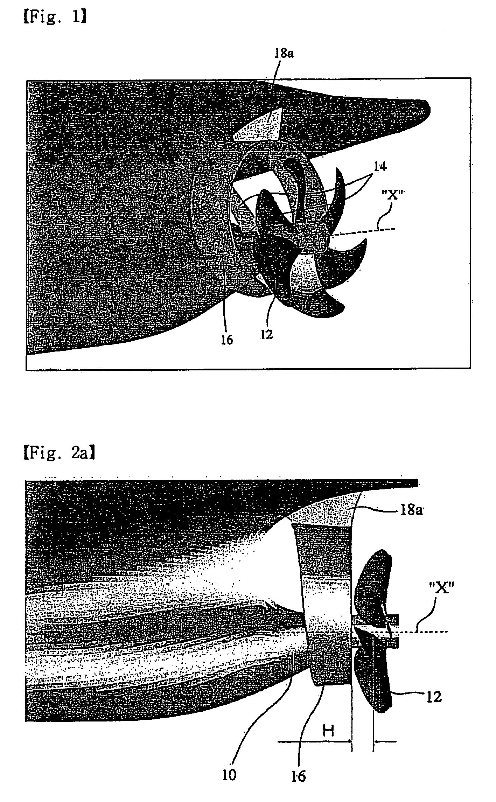

The duct 16 is fastened to the hull by a support 18. As shown in FIGS. 2 through 4, the support 18 includes an upper support member 18a which connects the outer surface of the duct 16 to the lower portion of the hull, and a lower support member 18b which connects the inner surface of the duct 16 to the lower portion of the stern boss 10.

FIG. 5 illustrates an eccentric ratio of a center axis Y of the duct 16 to the center axis X of the screw 12. In the case where the screw 12 is a typical clockwise-rotation type, the center axis Y of the duct 16 is eccentric upwards and to the right from the center axis X of the screw 12 with respect to the direction indicated from the stern side towards the bow side. Eccentricity of the center axis Y of the duct 16 to the center axis X of the screw 12 is set such that 0 < Hc < 0.3Dp and 0 < Bc < 0.2Dp are satisfied. Here, Dp denotes the diameter of the screw 12. Hc denotes the upward eccentricity at which the center axis Y of the duct 16 is eccentric upwards from the center axis X of the screw 12. In addition, Bc denotes a right eccentricity at which the center axis Y of the duct 16 is eccentric to the right from the center axis X of the screw 12.

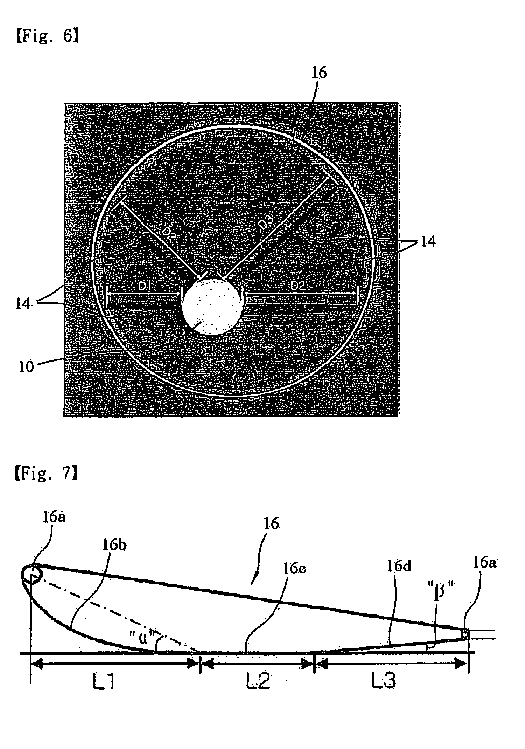

Furthermore, depending on the eccentric ratio of the center axis Y of the duct 16 to the center axis X of the screw 12, the lengths of the blades of the pre-swirl stator 14 are determined. In the case where the two blades are provided on each of the port and starboard sides based on the center axis X of the screw 12, as shown in FIG. 6, the lengths of the blades of the pre-swirl stator 14 are set such that 3Dp ≤D1 ≤ 0.7Dp, 0.6Dp ≤ D2 ≤ 1.0Dp and 0.5Dp ≤ D3 ≤ 1.2Dp are satisfied. Here, D1, D2 and D3 respectively denote the lengths of the blades of the pre-swirl stator 14. When the blades of the pre-swirl stator 14 extend from the circumferential outer surface of the stern boss 10 in the radial directions based on the center axis X of the screw 12 such that the lengths thereof satisfy the above-mentioned conditions, two blades are oriented level with the center axis X of the screw 12, and the remaining two blades are inclined upwards with respect to the horizontal plane including the center axis X of the screw 12. In addition, the inner diameter Dd of the duct 16 is set with respect to the diameter Dp of the screw 12 such that the inequality of 0.5Lp ≤ Dd ≤ 1.0Dp is satisfied.

FIG. 7 shows the cross-section of the duct 16. The duct 16 has a hollow structure which is manufactured in such a way that rods 16a are respectively provided in a leading edge and a tailing edge of the duct 16 and boards are adhered to each other inside and outside based on the rods 16a. Therefore, the boards which form the duct 16 can be more easily adhered to each other using the rods 16a.

In this case, the inside surface of the duct 16 includes, in positional sequence from the leading edge to the tailing edge, an inclined curved portion 16b, a horizontal linear portion 16c and an inclined linear portion 16d which are integrated with each other. The horizontal linear portion 16c is connected to the outer ends of the blades of the pre-swirl stator 14. Here, because the horizontal linear portion 16c is parallel to the center axis X of the screw 12, the coupling of the duct 16 to the pre-swirl stator 14 can be facilitated.

Furthermore, horizontal lengths L1, L2 and L3 (on the extension line of the horizontal linear portion) of the inclined curved portion 16b, the horizontal linear portion 16c and the inclined linear portion 16d respectively are 0.4 times, 0.2 times and 0.4 times the chord length of the duct 16.

Here, with respect to the extension line of the horizontal linear portion 16c, an inclined angle a defined by the inclined curved portion 16b on the inner surface of the leading edge of the duct 16 is set such that it ranges from 20° to 30°, and an inclined angle β defined by the inclined linear portion 16d on the inner surface of the tailing edge of the duct 16 is set such that it ranges from 2° to 6°.

Hence, due to the inclined angle a of the inclined curved portion 16b on the leading edge of the duct 16, the inclined curved portion 16b can smoothly guide fluid into the duct 16 and thus reduce the pressure of fluid around the inlet of the duct 16, thus increasing the current speed of the fluid. In addition, due to the inclined angle β of the inclined linear portion 16d, the inclined linear portion 16d guides fluid such that fluid can flow into the screw 12 after it is increased in current speed around the outlet of the duct 16. Therefore, the duct 16 can function to accelerate and rectify the flow of fluid, thus reducing propeller-induced hull-pressure fluctuations.

Meanwhile, as shown in FIG. 2A, a distance H between the end of the tailing edge of the duct 16 and the center line of the blades of the screw 12 is set such that the minimum gap between the duct 16 and the screw 12 which can prevent the duct 16 from interfering with the blades of the screw 12 can be ensured and the distance H is not greater than 0.3 times the diameter Dp of the screw 12. Preferably, the minimum of the distance H is greater than or equal to 0.1 times the diameter Dp of the screw 12. Furthermore, the maximum of the distance H is less than or equal to 0.3 times the diameter Dp of the screw 12. The reason for the setting of the maximum of the distance H is to prevent the fluid flow from accelerating and to prevent the rectifying effect of the duct 16 from becoming worse.

Hereinafter, the operation and effect of the ducted pre-swirl stator assembly according to the present invention will be explained.

As stated above, the pre-swirl stator 14 having the blades is provided on the circumferential outer surface of the stern boss 10 disposed at the stern side of the hull. The duct 16 is installed such that the center axis Y thereof is disposed at a position eccentric upwards and rightwards from the center axis X of the screw 12 and the outer ends of the blades of the pre-swirl stator 14 are coupled to the inner surface of the duct 16. Furthermore, the duct 16 is reliably fastened to the hull and the stern boss 10 by the support 18. The duct 16 changes an inflow angle at which fluid is drawn from the pre-swirl stator 14 into the screw 12, thus reducing a loss of kinetic energy of fluid, and increasing the axial kinetic energy of the fluid, thereby markedly enhancing the propulsion performance of the screw 12.

Here, the reason for the structure in which the center axis Y of the duct 16 is eccentric upwards and rightwards from the center axis Y of the screw 12 is that cavitation mainly occurs on the screw 12 in an 11 to 3 o'clock section based on the center axis X of the screw 12 in the direction indicated from the stern side towards the bow side. In other words, due to the eccentric structure of the duct 16 according to the present invention, the current speed of fluid can be increased in the above-mentioned 11 to 3 o'clock section of the screw 12, thus reducing cavitation.

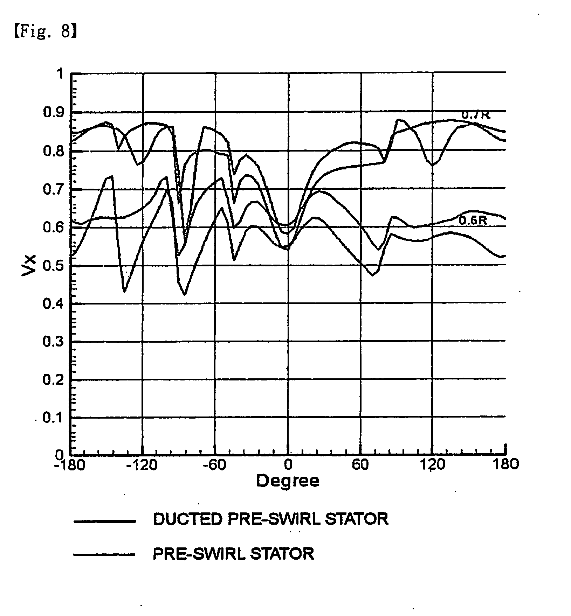

This fact can be more clearly understood by the graph of FIG. 8 which compares the distributions of counter currents in the case where only the pre-swirl stator 14 is provided on the stern boss 10 and the case where both the pre-swirl stator 14 and the duct 16 which is eccentric upwards and rightwards are installed. Here, the upward eccentricity Hc and the rightward eccentricity Bc of the center axis Y of the duct 16 with respect to the center axis X of the screw 12 are set in the manner described above.

In detail, FIG. 8 illustrates the case (expressed in red) where only the pre-swirl stator 14 is provided and the case (expressed in blue) where both the pre-swirl stator 14 and the duct 16 which is eccentric upwards and rightwards are installed. Referring to FIG. 8, with regard to the velocity distributions Vx of axial counter current of the screw 12 in a 50% portion and a 70% portion of the radius of the blade, it is to be interpreted that the case of the structure having both the pre-swirl stator 14 and the duct 16 which is eccentric upwards and rightwards is increased in the axial velocity into a screw 12 by about 15% compared to the case where only the pre-swirl stator 14 is provided.

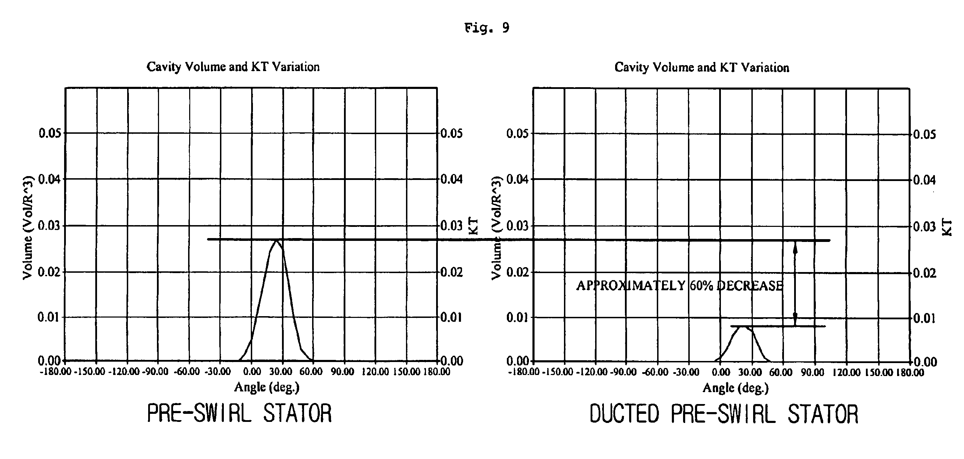

Furthermore, as shown in FIG. 9, when comparing the volume of cavitation formed in the case where only the pre-swirl stator 14 is installed and that of the case where both the pre-swirl stator 14 and the duct 16 are installed, the case of the ducted pre-swirl stator reduces the volume of formed cavitation by 60%, because the duct 16 surrounds the outer ends of the blades of the pre-swirl stator 14 and thus conducts the fluid flow accelerating and rectifying function. Here, since the duct 16 is firmly fastened to the hull and the stern boss 10 by the support 18, the structural stability of the duct 16 can be further enhanced.

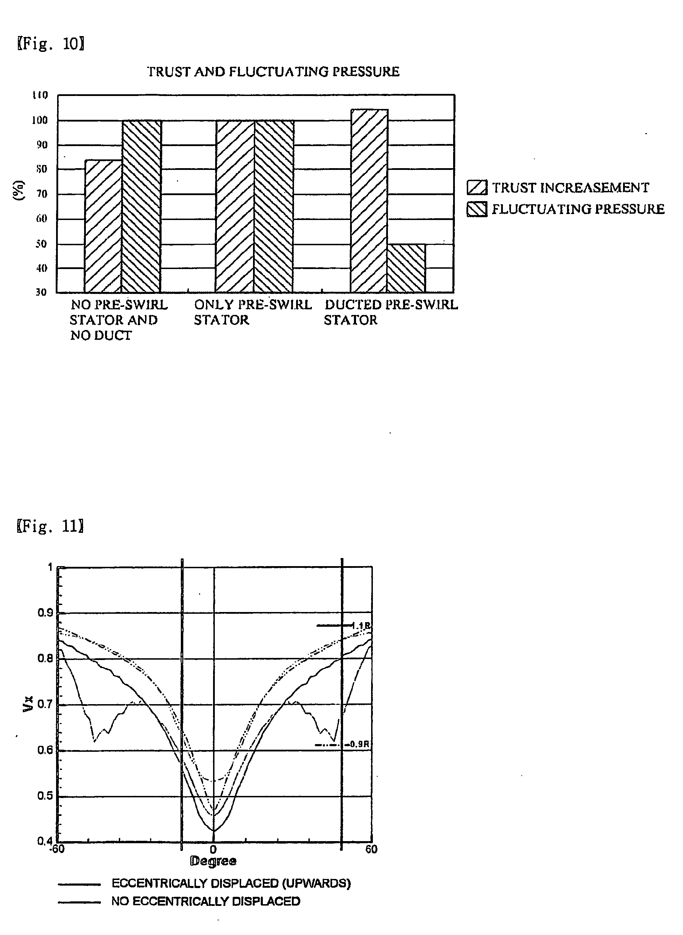

As a result, propeller-induced hull-pressure fluctuations can be reduced to 50%. Thereby, the present invention can markedly reduce hull-pressure fluctuations transmitted to the hull by generation of cavitation, thus improving the vibration performances of the hull. Furthermore, this can be more clearly interpreted by the graph of FIG. 10 which comparatively shows the effect on thrust and fluctuating pressure in the case where neither pre-swirl stator 14 nor the duct 16 are installed, the case where only the pre-swirl stator 14 is installed and the case where both the pre-swirl stator 14 and the duct 16 are installed. That is, the recovery of energy loss of the pre-swirl stator 14 with respect to the rotational direction, and an additional thrust generating effect of the duct and an inflow current acceleration effect of the duct increase the thrust of the screw 12. In addition, the duct 16 functions to reduce fluctuating pressure in the screw 12.

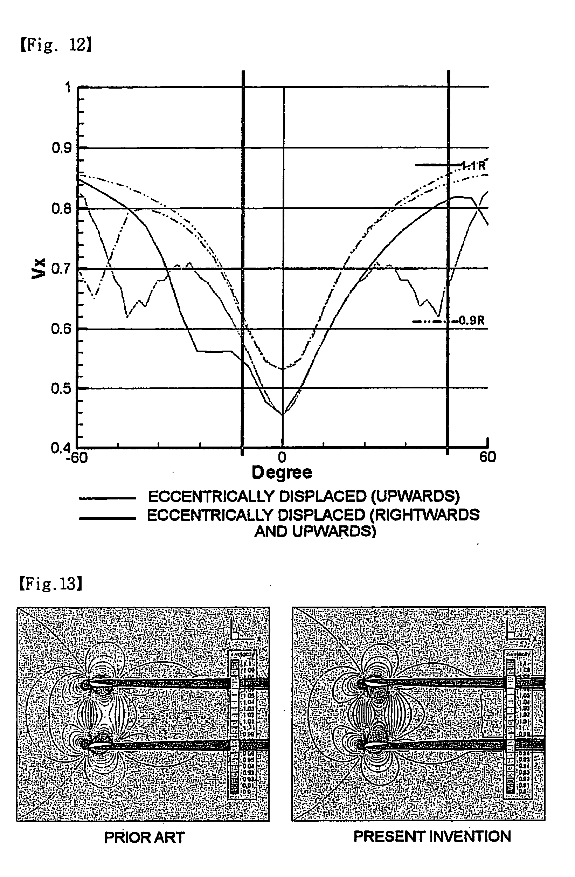

Furthermore, FIGS 11 and 12 compare velocity distributions Vx of axial counter currents in the screw 12 in the case where the center axis Y of the duct 16 is eccentrically displaced only upwards from the center axis X of the screw 12 and the case where the center axis Y of the duct 16 is eccentrically displaced rightwards and upwards from the center axis X of the screw 12.

In detail, in the case of the typical screw 12 that rotates in the clockwise direction based on the direction indicated from the stern side of the hull, cavitations are mainly generated in a section between -10 ° and 50° of the entire rotational area of the screw 12, that is, in an 11 to 3 o'clock section based on the center axis X of the screw 12 in the direction indicated from the stern side towards the bow side. Therefore, to increase the axial velocity of fluid drawn into the screw 12 in this section, the center axis Y of the duct 16 is set such that it is eccentric upwards and rightwards from the center axis X of the screw 12.

Thereby, the axial velocity of fluid drawn into the screw 12 can be increased in the section between - 10° and 50° of the entire rotational area of the screw 12, thus reducing the generation of cavitations. As a result, fluctuating pressure applied to the hull by cavitations generated in the screw 12 can be markedly reduced.

In other words, the effects of improving the velocity distribution of fluid drawn into the screw 12 in such a way as to eccentrically displace the center axis Y of the duct 16 upwards and rightwards from the center axis X of the screw 12 can be appreciated by analyzing the velocity distributions Vx of axial counter currents in the screw 12 for the case of FIG. 11 where the center axis Y of the duct 16 is eccentrically displaced only upwards from the center axis X of the screw 12 and the case of FIG. 12 where the center axis Y of the duct 16 is eccentrically displaced rightwards and upwards from the center axis X of the screw 12.

First, FIG. 11 is a graph comparing the velocity distribution Vx of axial counter current for the case where the center axis Y of the duct 16 is eccentrically displaced upwards from the center axis X of the screw 12 to that of the case where the center axis Y is aligned with the center axis X. It is clear that the axial velocity of fluid for the case of the upward eccentric axis structure is increased around a section corresponding to 0° of the entire rotational area of the screw 12 compared to that of the aligned axis structure. On the other hand, it is clear that the axial velocity of fluid of the case of the upward eccentric axis structure is reduced around a section corresponding to 50° of the entire rotational area of the screw 12 compared to that of the aligned axis structure.

FIG. 12 is a graph comparing the velocity distribution Vx of axial counter current to the case where the center axis Y of the duct 16 is eccentrically displaced rightwards and upwards from the center axis X of the screw 12 to that of the case where it is eccentrically displaced only upwards therefrom. It can be understood that the axial velocity of fluid for the case of the upward and rightward eccentric axis structure is increased around a section corresponding to 50° of the entire rotational area of the screw 12 compared to that of the upward eccentric axis structure.

In conclusion, it can be appreciated that in the case of the present invention where the center axis Y of the duct 16 is eccentrically displaced rightwards and upwards from the center axis X of the screw 12, the axial velocity of fluid drawn into the screw 12 is increased compared to that of the case where the center axis Y is aligned with the center axis X or eccentrically displaced only upwards therefrom. As such, an increase in the axial velocity of fluid drawn into the screw 12 reduces the generation of cavitations and mitigates fluctuating pressure applied to the hull. In particular, in the present invention, an increase in the axial velocity of fluid drawn into the screw 12 is focused on a section of the entire rotational area of the screw 12 in which cavitations are mainly generated, thus maximizing the above-mentioned effects of the present invention.

Furthermore, referring to in FIG. 7 showing the cross-section of the duct 16, the inclined curved portion 16b which is formed in the leading edge of the duct 16 at the inclined angle α can guide the smooth inflow of fluid into the duct 16, thus promoting an increase in current speed of the fluid. This can be interpreted by the views of FIG. 13 comparing variations of the current speed of fluid between the present invention and the conventional technique. In detail, as shown in profiles of variations of the current speed of fluid which are formed around the ducts, the duct 16 of the present invention increases the current speed of the fluid by 5% compared to that of the conventional technique. The increase in current speed fluid exhibits the fluid flow accelerating and rectifying effect of the duct 16, thus restraining generation of cavitations in the screw 12, thereby mitigating propeller-induced hull-pressure fluctuations.

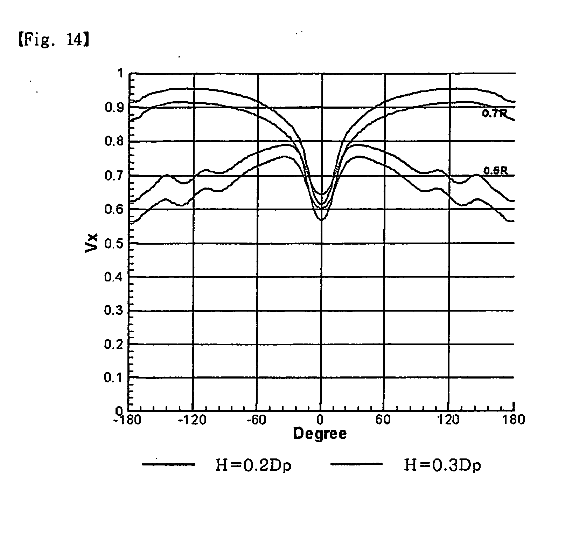

In addition, referring to FIG. 14 illustrating the rectification effect depending on the distance H between the end of the tailing edge of the duct 16 and the center axis X of the screw 12, it is appreciated that the rectification effect is maximized when the distance H is less 0.3 times the diameter Dp of the screw 12. In detail, when the distance H is greater than or equal to 0.3 times the diameter Dp of the screw 12, the velocity distribution Vx is rapidly reduced compared to that of the case of 0.2 times. This proves the deterioration of propulsion performance and the effect of reducing the fluctuating pressure. Therefore, in the present invention, the distance H between the end of the tailing edge of the duct 16 and the center axis X of the screw 12 is set at a range between the minimum distance at which interference between the screw 12 and duct 16 does not occur and the maximum distance at which the deterioration of current speed is not induced.

As described above, in a ducted pre-swirl stator assembly according to the present invention, a pre-swirl stator is provided ahead of a screw of a ship to vary an angle at which fluid is drawn into the screw when the ship is in motion, thus enhancing the propulsion performance. A duct is disposed ahead of the screw to accelerate and rectify the flow of fluid drawn into the screw such that the propulsion performance can be further enhanced. To realize the optimum coupling between the duct and the pre-swirl stator, the duct is coupled to the pre-swirl stator such that the center axis of the duct is eccentric from the center axis of the screw. Thereby, the propulsion performance of the screw can be maximized.

Furthermore, due to realization of the optimal arrangement between the pre-swirl stator and the duct, the present invention can reduce the volume of cavitations generated in the screw, thus mitigating fluctuating pressure of the screw applied to the hull of the ship, thereby minimizing the vibrations of the ship.

Although the preferred embodiment of the present invention has been disclosed for illustrative purposes, those skilled in the art will appreciate that various modifications, additions and substitutions are possible, without departing from the scope as disclosed in the accompanying claims.

## Claims

1. A ducted pre-swirl stator assembly, comprising:
a pre-swirl stator providable on a stern boss of a hull, the pre-swirl stator having at least one blade extending in a radial direction based on a center axis of a screw ;
a cylindrical duct coupled to an outer end of the blade of the pre-swirl stator; and
a support for fastening the duct to the hull, **characterized in that**
a center axis of the duct is eccentric upwards and rightwards from the center axis of the screw with respect to a direction indicated from a stern side to a bow side.

2. The ducted pre-swirl stator assembly as set forth in claim 1, wherein an eccentricity of the center axis of the duct from the center axis of the screw is set with respect to a diameter Dp of the screw such that an upward eccentricity (Hc) satisfies 0 < Hc < 0.3Dp and a rightward eccentricity (Bc) satisfies 0 < Bc < 0.2Dp.

3. The ducted pre-swirl stator assembly as set forth in claim 2, wherein an inner diameter (Dd) of the duct satisfies 0.5Dp ≤ Dd ≤ 1.0Dp with respect to the diameter (Dp) of the screw.

4. The ducted pre-swirl stator assembly as set forth in claim 1 or 2, wherein the duct has:
an inclined curved portion on an inner surface of a leading edge of the duct, the inclined curved portion being inclined at an inclined angle ranging from 20° to 30°;
an inclined linear portion on an inner surface of a tailing edge of the duct, the inclined linear portion being inclined at an inclined angle ranging from 2 ° to 6 ° ; and
a horizontal linear portion formed between the inclined curved portion and the inclined linear portion, the horizontal linear portion being connected to the outer end of the blade of the pre-swirl stator,
wherein the inclined angle of each of the inclined curved portion and the inclined linear portion is set with respect to a line extending from the horizontal linear portion in a direction parallel to the horizontal linear portion.

5. The ducted pre-swirl stator assembly as set forth in claim 4, wherein lengths of the inclined curved portion, the horizontal linear portion and the inclined linear portion respectively are 0.4 times, 0.2 times and 0.4 times a chord length of the duct.

6. The ducted pre-swirl stator assembly as set forth in claim 1 or 2, wherein a distance between an end of a tailing edge of the duct and a center line of blades of the screw in a longitudinal direction of the hull is set with respect to the diameter Dp of the screw such that 0.1Dp < H < 0.3Dp is satisfied.

7. The ducted pre-swirl stator assembly as set forth in claim 1 or 2, wherein the support comprises:
an upper support member connecting an outer surface of the duct to a lower portion of the hull; and
an upper support member connecting an inner surface of the duct to a lower portion of the stern boss.

8. The ducted pre-swirl stator assembly as set forth in claim 1 or 2, wherein the blade of the pre-swirl stator comprises a plurality of blades arranged such that based on the center axis of the screw, two blades are disposed on a port side and one blade is disposed on a starboard side, or two blades are disposed on the port side and two blades are disposed on the starboard side, wherein at least one pair of blades of the port/starboard side blades of the pre-swirl stator is level with the center axis of the screw, and a remaining blade or remaining blades of the pre-swirl stator are inclined upwards with respect to the center axis of the screw.

## Patentansprüche

1. Kanal-Vorwirbelstatorbaugruppe, aufweisend:
einen Vorwirbelstator, der auf einem runden Heckvorsprung eines Schiffsrumpfs vorsehbar ist,
wobei der Vorwirbelstator zumindest ein Blatt hat, das sich basierend auf einer Mittelachse einer Schraube in einer radialen Richtung erstreckt;
einen zylindrischen Kanal, der an ein äußeres Ende des Blatts des Vorwirbelstators gekoppelt ist; und
eine Halterung zum Befestigen des Kanals an dem Schiffsrumpf,
**dadurch gekennzeichnet, dass**
eine Mittelachse des Kanals bezüglich einer Richtung, die von einer Heckseite zu einer Bugseite angegeben ist, exzentrisch aufwärts und zur Rechten von der Mittelachse der Schraube ist.

2. Kanal-Vorwirbelstatorbaugruppe, wie in Anspruch 1 dargelegt, wobei eine Exzentrizität der Mittelachse des Kanals von der Mittelachse der Schraube hinsichtlich eines Durchmessers Dp der Schraube so bestimmt ist, dass eine Exzentrizität nach oben (Hc) 0 < Hc < 0,3Dp erfüllt und eine Exzentrizität nach rechts (Bc) 0 < Bc < 0,2Dp erfüllt.

3. Kanal-Vorwirbelstatorbaugruppe, wie in Anspruch 2 dargelegt, wobei ein innerer Durchmesser (Dd) des Kanals hinsichtlich des Durchmessers (Dp) der Schraube 0,5Dp ≤ Dd ≤ 1,0Dp erfüllt.

4. Kanal-Vorwirbelstatorbaugruppe, wie in Anspruch 1 oder 2 dargelegt, wobei der Kanal aufweist:
einen schrägen gekrümmten Abschnitt auf einer inneren Fläche einer Vorderkante des Kanals, wobei der schräge gekrümmte Abschnitt um einen Neigungswinkel, der in einem Bereich von 20° bis 30° liegt, schräg ist;
einen schrägen linearen Abschnitt auf einer inneren Fläche einer Hinterkante des Kanals, wobei der schräge lineare Abschnitt um einen Neigungswinkel, der in einem Bereich von 2° bis 6° liegt, schräg ist; und
einen horizontalen linearen Abschnitt, der zwischen dem schrägen gekrümmten Abschnitt und dem schrägen linearen Abschnitt gebildet ist, wobei der horizontale lineare Abschnitt mit dem äußeren Ende des Blatts des Vorwirbelstators verbunden ist,
wobei der Neigungswinkel von sowohl dem schrägen gekrümmten Abschnitt als auch von dem schrägen linearen Abschnitt hinsichtlich einer Linie, die sich von dem horizontalen linearen Abschnitt in einer Richtung parallel zu dem horizontalen linearen Abschnitt erstreckt, bestimmt ist.

5. Kanal-Vorwirbelstatorbaugruppe, wie in Anspruch 4 dargelegt, wobei Längen des schrägen gekrümmten Abschnitts, des horizontalen linearen Abschnitts und des schrägen linearen Abschnitts jeweils dem 0,4-fachen, 0,2-fachen und 0,4-fachen einer Sehnenlänge des Kanals entsprechen.

6. Kanal-Vorwirbelstatorbaugruppe, wie in Anspruch 1 oder 2 dargelegt, wobei ein Abstand zwischen einem Ende einer Hinterkante des Kanals und einer Mittellinie der Schaufeln der Schraube in einer Längsrichtung des Schiffsrumpfs hinsichtlich des Durchmessers Dp der Schraube so festgelegt ist, dass 0,1Dp < H < 0,3Dp erfüllt ist.

7. Kanal-Vorwirbelstatorbaugruppe, wie in Anspruch 1 oder 2 dargelegt, wobei die Halterung aufweist:
ein oberes Halterungselement, das eine äußere Fläche des Kanals mit einem unteren Abschnitt des Schiffsrumpfs verbindet; und
ein oberes Halterungselement, das eine innere Fläche des Kanals mit einem unteren Abschnitt des runden Heckvorsprungs verbindet.

8. Kanal-Vorwirbelstatorbaugruppe, wie in Anspruch 1 oder 2 dargelegt, wobei das Blatt des Vorwirbelstators eine Mehrzahl von Blättern aufweist, die so angeordnet sind, dass, basierend auf der Mittelachse der Schraube, zwei Blätter auf einer Backbordseite und ein Blatt auf einer Steuerbordseite angeordnet sind, oder zwei Blätter auf der Backbordseite und zwei Blätter auf der Steuerbordseite angeordnet sind, wobei zumindest ein Paar von Blättern der backbordseitigen/steuerbordseitigen Blätter des Vorwirbelstators mit der Mittelachse der Schraube horizontal ausgerichtet ist, und ein verbleibendes Blatt oder verbleibende Blätter des Vorwirbelstators hinsichtlich der Mittelachse der Schraube nach oben geneigt sind.

## Revendications

1. Ensemble de stator à prérotation à conduit, comprenant :
un stator à prérotation pouvant être prévu sur une lunette d'une coque, le stator à prérotation ayant au moins une aube s'étendant dans une direction radiale basée sur un axe central d'une vis ;
un conduit cylindrique couplé à une extrémité externe de l'aube du stator à prérotation ; et
un support pour fixer le conduit sur la coque, **caractérisé en ce que** :
un axe central du conduit est excentrique vers le haut et vers la droite par rapport à l'axe central de la vis selon une direction indiquée de la poupe à la proue.

2. Ensemble de stator à prérotation à conduit selon la revendication 1, dans lequel une excentricité de l'axe central du conduit par rapport à l'axe central de la vis est déterminée par rapport à un diamètre Dp de la vis de sorte qu'une excentricité ascendante (Hc) satisfait 0 < Hc < 0,3 Dp et une excentricité vers la droite (Bc) satisfait 0 < Bc < 0,2 Dp.

3. Ensemble de stator à prérotation à conduit selon la revendication 2, dans lequel un diamètre interne (Dd) du conduit satisfait 0,5 Dp ≤ Dd ≤ 1,0 Dp par rapport au diamètre (Dp) de la vis.

4. Ensemble de stator à prérotation à conduit selon la revendication 1 ou 2, dans lequel le conduit a :
une partie incurvée inclinée sur une surface interne d'un bord d'attaque du conduit, la partie incurvée inclinée étant inclinée selon un angle incliné de l'ordre de 20° à 30° ;
une partie linéaire inclinée sur une surface interne d'un bord de fuite du conduit, la partie linéaire inclinée étant inclinée selon un angle incliné de l'ordre de 2° à 6° ; et
une partie linéaire horizontale formée entre la partie incurvée inclinée et la partie linéaire inclinée, la partie linéaire horizontale étant raccordée à l'extrémité externe de l'aube du stator à prérotation,
dans lequel l'angle incliné de chacune parmi la partie incurvée inclinée et la partie linéaire inclinée est déterminé par rapport à une ligne s'étendant de la partie linéaire horizontale dans une direction parallèle à la partie linéaire horizontale.

5. Ensemble de stator à prérotation à conduit selon la revendication 4, dans lequel les longueurs de la partie incurvée inclinée, de la partie linéaire horizontale et de la partie linéaire inclinée respectivement, représentent 0,4 fois, 0,2 fois et 0,4 fois une longueur de corde du conduit.

6. Ensemble de stator à prérotation à conduit selon la revendication 1 ou 2, dans lequel une distance entre une extrémité d'un bord de fuite du conduit et un axe central des aubes de la vis dans une direction longitudinale de la coque est déterminée par rapport au diamètre Dp de la vis de sorte que 0,1 Dp < H < 0,3 Dp est satisfaite.

7. Ensemble de stator à prérotation à conduit selon la revendication 1 ou 2, dans lequel le support comprend :
un élément de support supérieur raccordant une surface externe du conduit à une partie inférieure de la coque ; et
un élément de support supérieur raccordant une surface interne du conduit à une partie inférieure de la lunette.

8. Ensemble de stator à prérotation à conduit selon la revendication 1 ou 2, dans lequel l'aube du stator à prérotation comprend une pluralité d'aubes agencées de sorte qu'en fonction de l'axe central de la vis, deux aubes sont disposées à bâbord et une aube est disposée à tribord, ou deux aubes sont disposées à bâbord et deux aubes sont disposées à tribord, dans lequel au moins une paire des aubes à bâbord/tribord du stator à prérotation est au niveau de l'axe central de la vis, et une aube résiduelle ou des aubes résiduelles du stator à prérotation sont inclinées vers le haut par rapport à l'axe central de la vis.
